# EUROPEAN PATENT SPECIFICATION

(11) **EP 1 930 616 B1**
(45) Date of publication and mention of the grant of the patent: **29.10.2008**
(21) Application number: 06025488.5
(22) Date of filing: 08.12.2006
(51) Int. Cl.: F16D 65/092, F16D 55/225

(54) **Disc brake and brake pad**
Scheibenbremse und Bremsklotz
Frein à disque et plaquette de frein

(43) Date of publication of application: 11.06.2008
(73) Proprietor: Haldex Brake Products AB, 261 24 Landskrona (SE)
(72) Inventor: Gripemark, Joakim, 22220 Lund (SE); Stensson, Göran, 27755 Brösarp (SE)
(74) Representative: Hruschka, Jürgen

(56) References cited:
- WO-A-01/98681
- WO-A-02/48569
- DE-A1- 3 905 627
- JP-A- 6 117 465
- NL-A- 7 206 453

## Description

### Technical Field

The present invention concerns disc brakes and brake pads to be used in such disc brakes. Disc brakes normally either have a fixed caliper or a sliding caliper. The present invention is directed to disc brakes having a fixed caliper or a sliding caliper and one or more brake discs, of which at least one is arranged in a sliding manner. The present invention is mainly intended for, but not limited to, spot-type disc brakes, in which the brake pads only are to act on a restricted part of a full circle.

### Prior Art

Sliding brake discs are normally received on a sleeve, hub or the like by means of teeth, splines or the like, or by any other means giving a fixed connection in rotational direction but a sliding connection in axial direction. The hub, sleeve etc. is received on and connected to the wheel axle. Depending on type and make of the brake the brake disc may either be received on a sleeve on or otherwise connected to the hub, connected to the wheel axle, or the brake disc may be received directly on the hub, without the use of any sleeve. For convenience, the expression "hub" is normally used in this description, but it should be construed broadly also covering sleeves etc.. In order to allow for sliding there generally has to be a certain play between the teeth, splines or the like on the inner circumference of the brake disc and the teeth, splines or the like on the outer circumference of the hub or sleeve.

In order to ensure the sliding function of the brake disc on the hub and to avoid locking up also when dirt and corrosion do get deposited between the teeth, the play between the teeth has to be selected rather large, so that the brake disc is received "loosely" on the hub. In turn, such a large play allows the brake disc to take varying positions relative to the hub and has the effect that the brake disc will be guided by the brake pads in many situations. In the released condition of the brake, the large play may cause noise and vibrations due to movements of the brake disc in relation to the hub, which often are counteracted by springs or other disc stabilizing elements to be arranged between the brake disc and the hub or the part connected to the hub or between the brake disc and the caliper. Such arrangements are known e.g. from the International Publication WO 01/98681 A1 in the name of the applicant.

Generally, irrespective of the actual type of the disc brake, in such disc brakes the caliper of it on the one hand and the means for mounting the caliper to the vehicle on the other hand are always designed in such a way that the rotational axis of the brake disc is brought into coincidence or congruence with the rotational axis of the hub or the part connected to the hub.

During braking, however, both the caliper and the means for mounting the caliper on the vehicle are subjected to reaction forces and torques which result from the clamping force and the braking torque. This immanently will lead to elastic deflections or deformations of these components of the disc brake, the magnitude of which in turn depends on the magnitude of the clamping force and thus the braking torque.

The at least one brake disc which is axially sliding on the hub is guided from the respective brake pads which are allocated to the sliding brake disc so as to be in contact during braking. Upon elastic deflection of the caliper and/or the mounting means for the caliper, the brake pads will transfer these deflections to the one brake disc so that the position and direction of the rotational axis of the one brake disc will be changing during the braking process.

For sliding calipers it is known to counterbalance such torques, which will lead to uneven wear of the brake pads, by means of a particular design of the latter, as it is e.g. known from the German patent application DE 39 05 627 A1, in which the brake pad linings facing each other and being arranged on both sides of a brake disc are inclined in opposite directions, which will lead to different braking pressures over the length of the brake pads. Such effect will, however, be of no use for sliding brake discs as they will orientate themselves on the hub in accordance with the different braking pressures.

However, when the rotational axis of the slideable brake disc(s) does have a different orientation, i.e. different direction and inclination than the rotational axis of the hub or the part connected to the hub, the brake disc has to either slide axially in the disc to hub joint in order to compensate for that unbalance. Such effect will cause unwanted wear in the splined joint.

Or, in addition, due to the fact that the rotational axis of the brake disc and the hub are diverging, the brake disc also may be supposed to axial bending forces during rotation. Bending stresses, however, may cause fatigue in the brake disc and will consume some of the strength margins of the brake disc during its life cycle which is reduced, accordingly.

Moreover, after release of the brake, when no more clamping forces are applied, the rotational axis of the brake disc and the rotational axis of the hub are again coinciding. Under certain circumstances, this may lead to a continued contact over a certain area between the brake disc and the brake pad. If such continued area contact is present, a dragging torque is induced if no additional means are provided in the disc brake to retract the brake disc during release of the brake.

### Summary of the Invention

The present invention addresses the afore-mentioned problems, which occur in such disc brakes.

In particular, it is an object of the invention to provide a disc brake and a brake pad which allow a compensation of the braking-induced elastic deflections of both the caliper and the means of mounting the caliper on the vehicle.

Accordingly, the invention refers to a disc brake for a vehicle having a caliper receiving one or more brake pads and encircling one or more brake discs, of which at least one brake disc is received slideably on a hub or a part connected to the hub by means of intermeshing splines or teeth of both the brake disc and the hub or the part connected to the hub, which hub is received on a wheel axle, whereby the caliper comprises a brake actuation mechanism and the caliper can be mounted via fastening sections to mounting means of the vehicle. At brake engagement, i.e. shortly after the brake pad with the friction lining came into contact with the brake disc, the rotational axis of the at least one brake disc is inclined vis-à-vis the rotational axis of the hub or the part connected to the hub such that the rotational axis of the at least one brake disc is located on a generated surface of a doubled cone with a cone angle Θ and the center of which is being located on the rotational axis of the hub or the part connected to the hub.

This "initial" relation shall be at least realized according to the invention in that peculiar condition of the brake engagement, in which the clearance between the brake disc and the brake pads was overcome already, but shortly before any clamping forces or braking forces have reached a magnitude which is sufficient to induce any elastic deformations.

In other words, the disc brake is designed so as to provide an "initial" inclination of the at least on sliding brake disc at brake application such that a clamping force is large enough to bring the at least one brake disc into full area contact with the brake pads assigned to said at least one brake disc but which at the same time is still so low that the elastic deflections of the caliper and/or the mounting means are ignorable.

Accordingly, the "initial" inclination of the brake disc at the above described stage shall be selected with regard to the inventive concept and the design of the disc brake so that any inclinations between the rotational axis of the at least one brake disc and the rotational axis of the hub or the part connected to the hub, which are resulting from elastic deformations of the caliper and/or its mounting means during brake actuation due to the clamping force and/or braking torque, are reduced or even offset when braking in the normal driving direction is taking place.

Thereby, the total negative effects accompanying the elastic deflections from the disc angles and the splined joint, as described above, can be minimised substantially.

Due to the fact that not in the release condition, but only during braking the rotational axis of the brake disc will be coincident or congruent with the rotational axis of the hub or the part connected to the hub, i.e. share a common orientation, the axial displacements in the points of contact of the splines between the brake disc and the hub or the part connected to the hub are reduced, which in turn leads to reduced wear in the splines. Further, the occurrence of negative bending stresses in the sliding brake disc can be substantially avoided.

The solution according to the invention enables, as a consequence of the minimized effects as described above, a design of the respective disc brake with a caliper and means for mounting it on the vehicle, which need a lower stiffness. This in turn will allow the reduction of the amount of material to be used for such a disc brake and thus reduced costs for manufacturing and also reduced costs in the service and use of the corresponding vehicle due to the reduced weight of the disc brakes are a direct consequence.

The doubled cone with the cone angle Θ shall be preferably defined so that the rotational axis of the at least one brake disc is crossing the rotational axis of the hub or the part connected to the hub in or at least adjacent to the center of gravity of the at least one brake disc.

In one preferred embodiment according to the invention the rotational axis of the at least one brake disc is inclined vis-à-vis the rotational axis of the hub or the part connected to the hub such that the rotational axis of the at least one brake disc is located in the symmetry plane of the caliper. This symmetry plane depends on the configuration of the caliper and on its arrangement with reference to the wheel axle and to the circumference of the brake disc. The symmetry plane shall be construed strictly geometrically and doesn't necessarily have to be a vertical or horizontal symmetry plane.

In this connection the inclination of the rotational axis of the at least one brake disc may be such that the segment of the brake disc between the brake pads is constituting the segment of the brake disc in the circumference of it which is located axially most distant from the brake actuation mechanism.

If the disc segment between the allocated brake pads is in fact the segment which is axially most far away from the actuation mechanism, it is possible to achieve in the best manner possible that, just after release of the brake, the initial inclination of the rotational axis of the brake disc will incur wobbling-like rotational movements to be performed by the brake disc. By such an effect, the area contact between the brake pads and the brake disc can be sufficiently avoided which in turn avoids an unwanted dragging torque.

In another preferred embodiment according to the invention, the rotational axis of the at least one brake disc is inclined vis-à-vis the rotational axis of the hub or the part connected to the hub such that the rotational axis of the at least one brake disc is located in a plane including the rotational axis of the hub and being perpendicular to the symmetry plane of the caliper.

Still in another preferred embodiment according to the invention, the rotational axis of the at least one brake disc is inclined vis-à-vis the rotational axis of the hub or the part connected to the hub such that the rotational axis of the at least one brake disc is located in a plane including the rotational axis of the hub and being inclined to the symmetry plane of the caliper.

There exist several possibilities to realize the desired initial inclinations of the brake disc.

According to one possibility at least one part of the caliper is designed in order to provide the desired initial inclination of the brake disc.

Such parts could be the fastening sections of the caliper, i.e. that parts of the caliper with which the latter is fixed to the mounting means of the axle, such as for instance the carrier or torque plate. The fastening sections do comprise such a design and arrangement, that when the caliper is mounted to the mounting means, the desired inclination which accordingly is transferred to the at least one sliding brake disc is provided.

If the caliper is made in two part-form and comprises a bolted bridge at the reaction side of the caliper which is opposite of the actuation mechanism received in the caliper housing, according to another embodiment of the invention the inner surface of said bolted bridge is designed in such a way so as to provide the desired inclination. Such a design could also apply to an one piece caliper, in which the integrated bridge section comprises an accordingly shaped inner surface.

Accordingly, then the brake actuation mechanism has to be adapted to the so realized inclination. In other words, the actuation mechanism must allow a compensational angle between the axis of actuation and the rotational axis of the brake disc. This, for instance, can be achieved by a flexible connection between the spindle and the pressure plate which attaches to the backplate of the inner brake pad.

Alternatively, according to another possibility, the caliper itself can be inclined in a defined manner.

This can be achieved in that the mounting means for the caliper, for instance, the torque plate, are designed in such way so as to provide the desired inclination.

According to the invention, the initial inclination of the brake disc shall be adapted to the elastic characteristics of the individual calipers and the means for mounting them on the vehicle. The different individual elastic characteristics may be determined by strength calculations or measurements and torque level studies.

In addition, it is also possible to design the caliper with selected elastic properties in defined areas of its body in order to realize particular advantageous effects in combination with the defined disc inclination according to the invention. For instance, dragging could be avoided by such a combined configuration in the way as described above.

Based on these considerations, preferable inclinations can be typically realized with a cone angle Θ which is within the range of 0.1 - 0.5°.

Another way to achieve the desired initial inclination is by way of specifically designing the allocated brake pads.

In this context, the invention also refers to a brake pad for use in a disc brake for a vehicle having a caliper receiving one or more of said brake pads and encircling one or more brake discs, of which at least one brake disc is received slideably on a hub or a part connected to the hub by means of intermeshing splines or teeth of both the brake disc and the hub or the part connected to the hub, the rotational axis of the at least one brake disc, at brake engagement, being inclined vis-à-vis the rotational axis of the hub or the part connected to the hub, wherein the brake pad comprises a friction lining attached to a backplate of it, whereby the surface of the friction lining cooperating with the brake disc is inclined vis-à-vis the surface of the backplate opposite to the friction lining in correspondence with the desired inclination at brake engagement.

In preferred embodiments of the brake pad according to the invention, such inclination is realized in that either the friction lining or the backplate comprises a varying thickness. The thickness can vary in all planar directions of the brake pad according to the inclinations to be achieved.

In addition, the thickness of the friction lining can be further varied such that already peculiar tapered wear of the brake pad to be expected in particular disc brake designs can be considered so that the varying thickness is able to at least partly offset this tapered wear, which will optimize the disc inclination during the wear period of the brake pad.

Further objects and advantages of the present invention will be obvious for a person skilled in the art when reading the detailed description below of preferred embodiments.

### Brief Description of the Drawings

The invention will be explained further below by way of examples and with reference to the enclosed drawings. In the drawings:
Fig. 1 is a perspective view of an example of a disc brake as known in the prior art in which the rotational axis of the brake discs is coincident with the rotational axis of the hub;
Fig. 2a is a schematic view illustrating a principle according to the invention in which the rotational axis of the brake disc is situated in a symmetry plane of a caliper;
Fig. 2b is another schematic view illustrating an alternative principle according to the invention in which the rotational axis of the brake disc is situated in a plane being perpendicular to the symmetry plane of a caliper;
Fig. 2c is still another schematic view illustrating a further alternative principle according to the invention in which the rotational axis of the brake disc is situated in a plane being inclined in relation to the symmetry plane of the caliper;
Fig. 3 is a side view of a disc brake in a first embodiment according to the invention;
Fig. 4 is a top view of a disc brake in a second embodiment according to the invention;
Fig. 5 is a side view of a disc brake in a third embodiment according to the invention;
Fig. 6a is a side view of a disc brake in a fourth embodiment according to the invention;
Fig. 6b is a schematic cross section illustrating the connection between a pressure plate and an actuation spindle as embodied in the embodiment according to Fig. 6a;
Fig. 7 is a perspective view of a brake pad in a first embodiment according to the invention; and
Fig. 8 is perspective view of a brake pad in a second embodiment according to the invention.

### Detailed Description of Preferred Embodiments

As used in this description the expressions "axial" and "rotational" are in relation to a wheel axle associated with the disc brake and to the brake discs, hub or sleeve etc. received directly or by means of intermediate parts on the wheel axle.

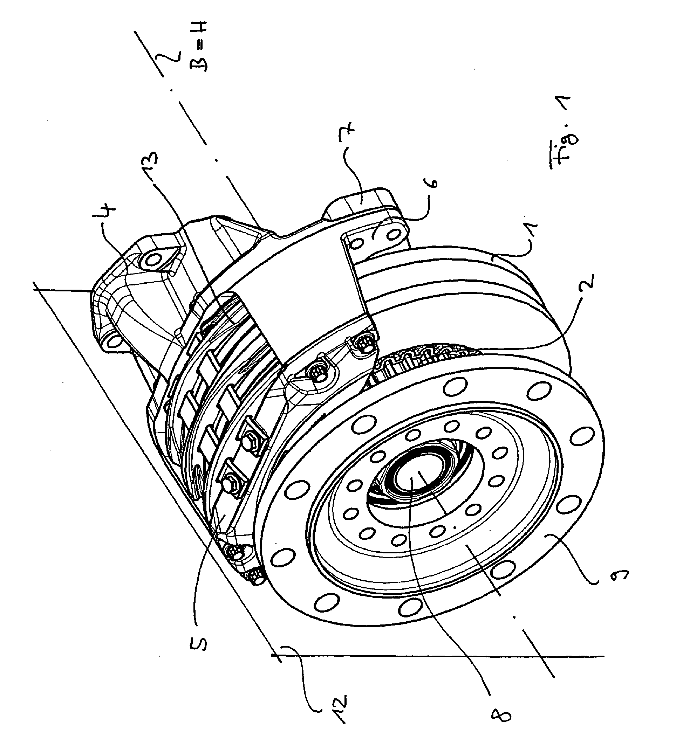

In Fig. 1, schematically, a disc brake is shown as it is known in the prior art. In the present example, the disc brake comprises two brake discs 1 slideably arranged in parallel on a hub 2 by means of splines 3. A caliper 4 comprises a separate bridge 5 which is bolted to the main part of the caliper 4 on the reaction side of the caliper 4, i.e. opposite to the actuation mechanism (not shown).

Since the brake discs 1 are able to slide on the hub 2, the caliper 4 together with the bridge 5 has to be fixed to the vehicle. By fastening means 6, which provide openings for bolts, the caliper 4 can be bolted to mounting means of the vehicle, e.g. a so-called torque plate 7.

The hub 2 is arranged on a wheel axle 8 which ends in a wheel flange 9. In the disc brake according to the prior art, the caliper 4, the hub 2 and the brake discs 1 are arranged relative to each other in such a way that a rotational axis B of the brake discs 1 coincides or is congruent with the rotational axis H of the hub 2 at the release condition of the disc brake.

During braking, under certain circumstances depending on the strength of the braking, the rotational axis B of the brake discs 1 and the rotational axis H of the hub 2 will diverge due to the elastic deformations induced in the caliper 4 and the bridge 5 and the mounting means 7 for it as a reaction to the clamping forces and the braking torques.

Since, as explained above, such elastic deflections are undesired, the invention proposes a disc brake in which the rotational axis B of the brake discs 1 and the rotational axis H of the hub 2 are diverged at the beginning engagement of the disc brake, namely at least shortly before any deflections will be induced in the components during braking.

In particular, the invention provides a design for a disc brake in which the rotational axis B of the brake discs 1 (or of at least one brake disc which is slideably arranged on a hub) is inclined vis-à-vis the rotational axis H of the hub 2 such that the rotational axis B of the brake discs 1 is located on a generated surface of a doubled cone 10 with a cone angle Θ and the center of which is being located on the rotational axis H of the hub 2. The center or symmetry axis of the doubled cone 10 in fact is formed by the rotational axis H of the hub 2.

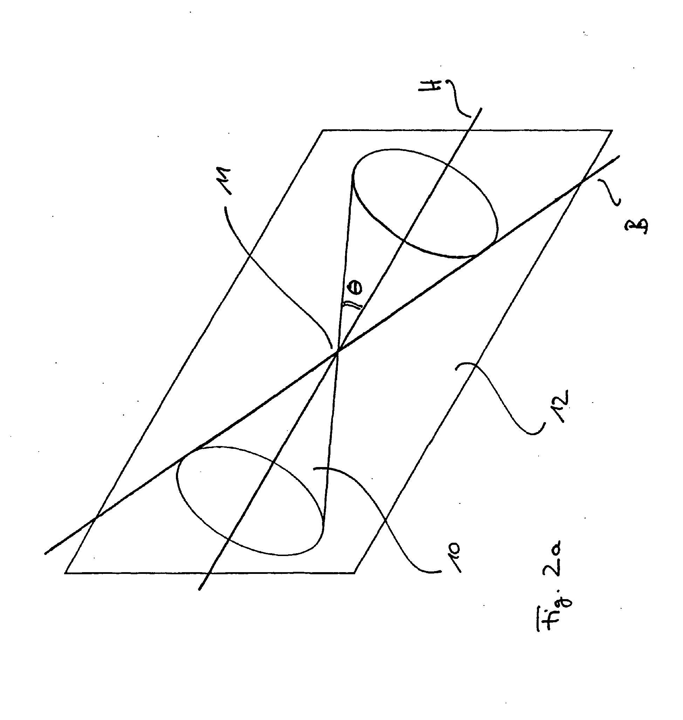

This is exemplarily shown in Fig. 2a. It has to be noted that the geometric deviations and inclinations in the following Figs. are in fact very small, but are shown in an exaggerated manner for a better illustration.

As can be seen, the rotational axis B of the brake discs 1 is diverging from the rotational axis H of the hub 2 by the cone opening angle Θ. This angle Θ is selected so that inclinations between the rotational axis B of the brake discs 1 and the rotational axis H of the hub 2, which are resulting from elastic deformations of the caliper 4 and/or its mounting means 7 during brake actuation due to the clamping force and/or braking torque are neutralized or at least substantially minimized.

The range of the angle Θ, depending on the design of the disc brake, typically is in the range of 0,1 - 0,5°.

It becomes apparent from the peculiar arrangement with a doubled cone 10 according to the invention that, in principle, every angular offset of the rotational axis B of the brake discs 1 and the rotational axis H of the hub 2 is possible depending on the arrangement of the disc brake relative to the wheel axle 8 on the one hand and the design of the caliper 4 on the other hand. The cone opening angle Θ is defined by the magnitude of elastic deflections to be compensated.

The doubled cone 10 is arranged within the disc brake preferably such that the rotational axis B of the brake discs 1 is crossing the rotational axis H of the hub 2 in or at least adjacent to the center of gravity 11 of the brake discs 1.

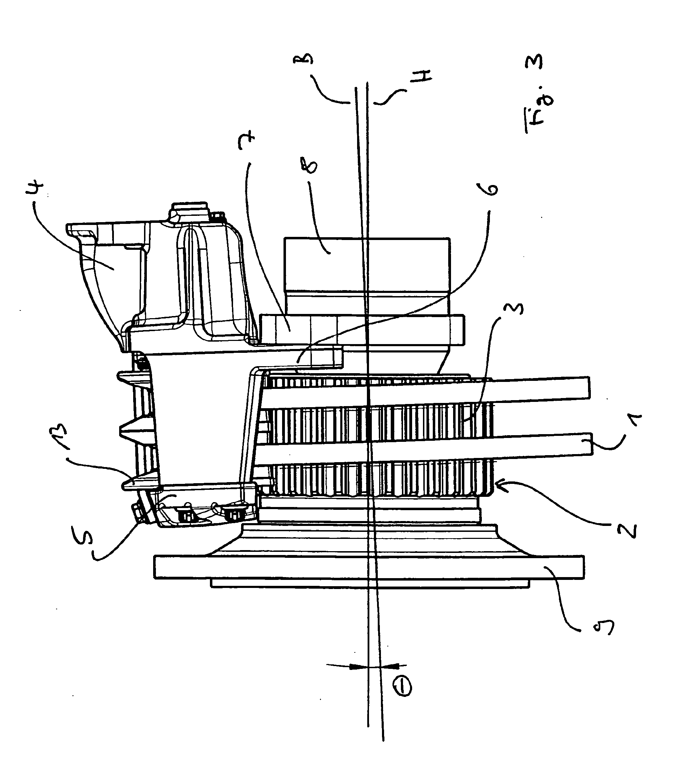

In one embodiment according to the invention, as shown in Fig. 2a, the rotational axis B of the brake discs 1 shall be inclined relative to the rotational axis H of the hub 2 in such a manner that the rotational axis B of the brake discs 1 is located in a symmetry plane 12 of the caliper 4. Such an arrangement is also shown in the Figs. 3, 5 and 6a in more detail. In particular for disc brakes which are configured to work in both rotational directions, such an arrangement of the rotational axis B of the brake discs 1 may be convenient.

This embodiment can be further enhanced in that the inclination of the rotational axis B of the brake discs 1 is selected in such a way that the segment of the brake disc 1 between brake pads 13, as can be better seen in Fig. 3, is constituting the segment of the brake disc in the circumference of it which is located axially most distant from the brake actuation mechanism arranged in the caliper 4 (not shown). By that design the undesired dragging effect can be reduced.

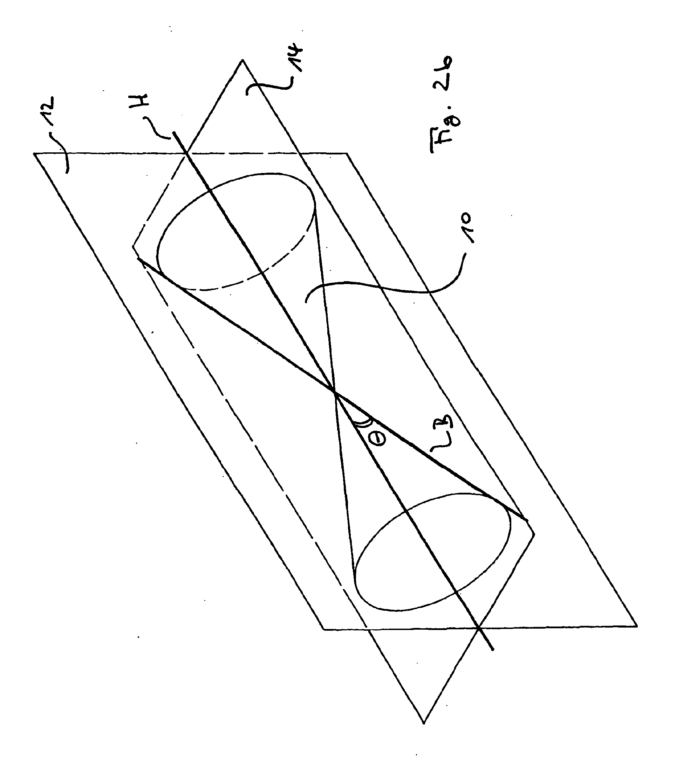

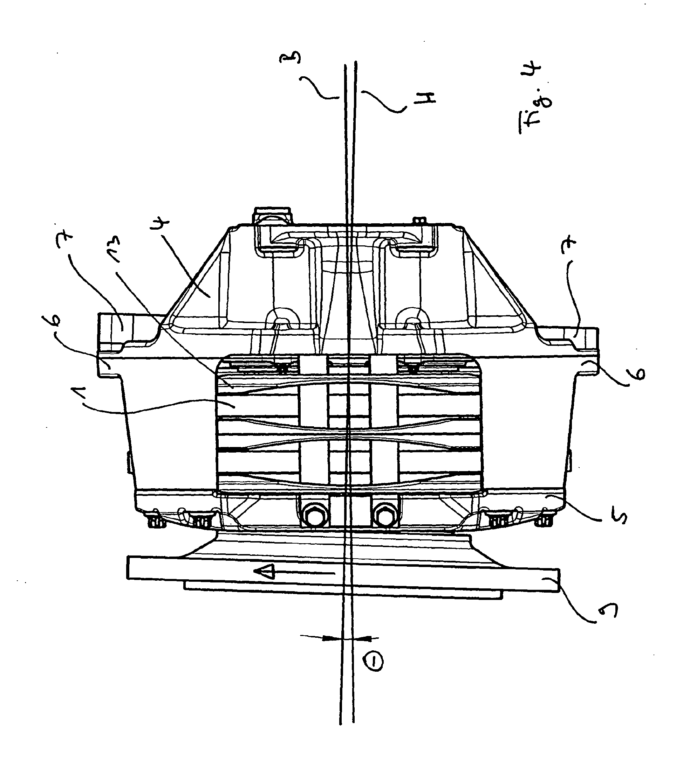

According to another embodiment of the invention, which is schematically illustrated in Fig. 2b, the rotational axis B of the brake discs 1 is inclined vis-à-vis the rotational axis H of the hub 2 in such a way that the rotational axis B of the brake discs 1 is located in a plane 14 which includes the rotational axis H of the hub 2 and which is being perpendicular to the symmetry plane 12 of the caliper 4. Such an arrangement is shown in Fig. 4 in more detail.

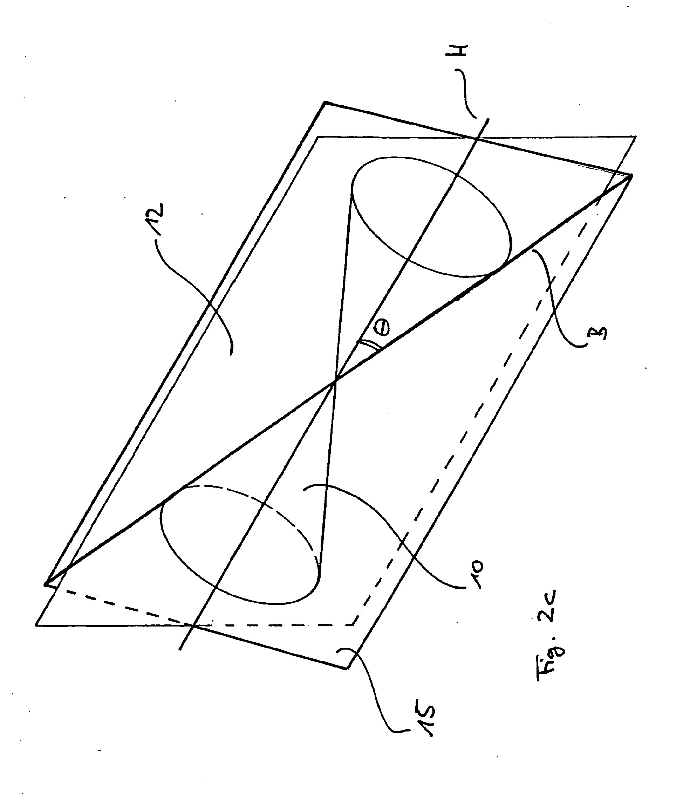

As schematically shown in Fig. 2c, in another embodiment according to the invention, the rotational axis B of the brake discs 1 is inclined relative to the rotational axis H of the hub 2 in such a way that the rotational axis B of the brake discs 1 is located in a plane 15 including the rotational axis H of the hub 2 and being inclined to the symmetry plane 12 of the caliper 4. In other words, said plane 15 is defined and spanned by the rotational axis H of the hub 2 and the rotational axis B of the brake discs 1 but not being perpendicular to the symmetry plane 12 of the caliper 4.

In Fig. 3, a brake disc is shown in which the rotational axis B of the brake discs 1 is diverged to the rotational axis H of the hub 2 by the angle Θ in the symmetry plane 12 of the caliper 4 only. This is realized in that the fastening section or means 6 of the caliper 4 comprise an inclined shape and such dimensions that when the caliper 4 gets bolted to the torque plate 7 by means of such a designed fastening section 6, the caliper 4 and thereby the brake discs 1 are inclined vis-à-vis the hub 2.

Alternatively, such fastening means 6 on both sides of the symmetry plane 12 of the caliper 4 can be designed with different geometric dimensions so that the inclination is realized in such a manner that, as explained in relation to Fig. 2b above, the rotational axis B of the brake discs 1 is inclined vis-à-vis the rotational axis H of the hub 2 such that the rotational axis B of the brake discs 1 is located in the plane 14 which includes the rotational axis H of the hub 2 and which is at the same time being perpendicular to the symmetry plane 12 of the caliper 4, as this can be seen in the top view of Fig. 4.

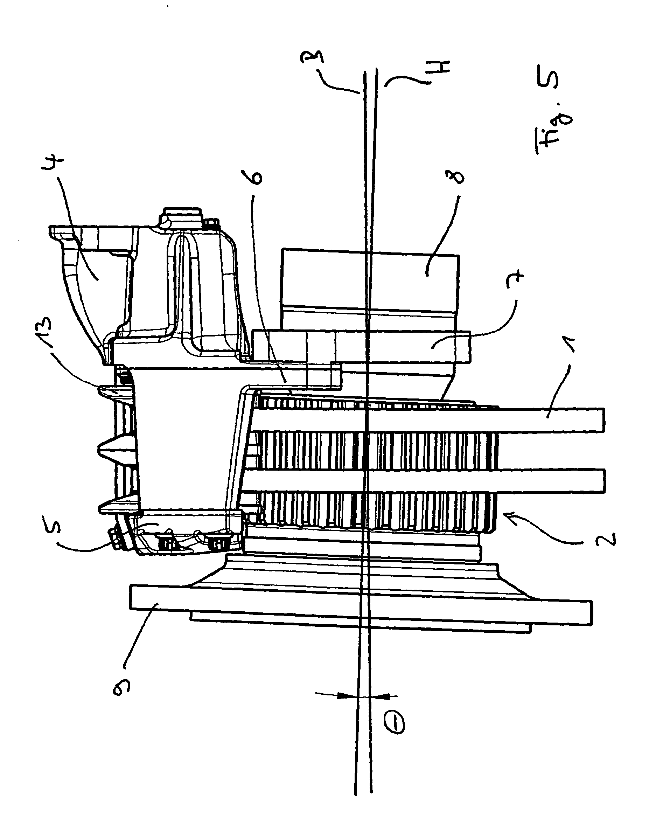

With reference to Fig. 5, in an embodiment of the disc brake according to the invention, which is an alternative to the embodiment as shown in Fig. 3, the desired inclination is achieved by means of the specific design of the means for mounting the caliper 4 to the vehicle. The torque plate 7 for that comprises such an inclination and geometric dimension relative to the wheel axle 8 that the caliper 4 and thereby the brake discs 1 are inclined by the angle Θ relative to the hub 2.

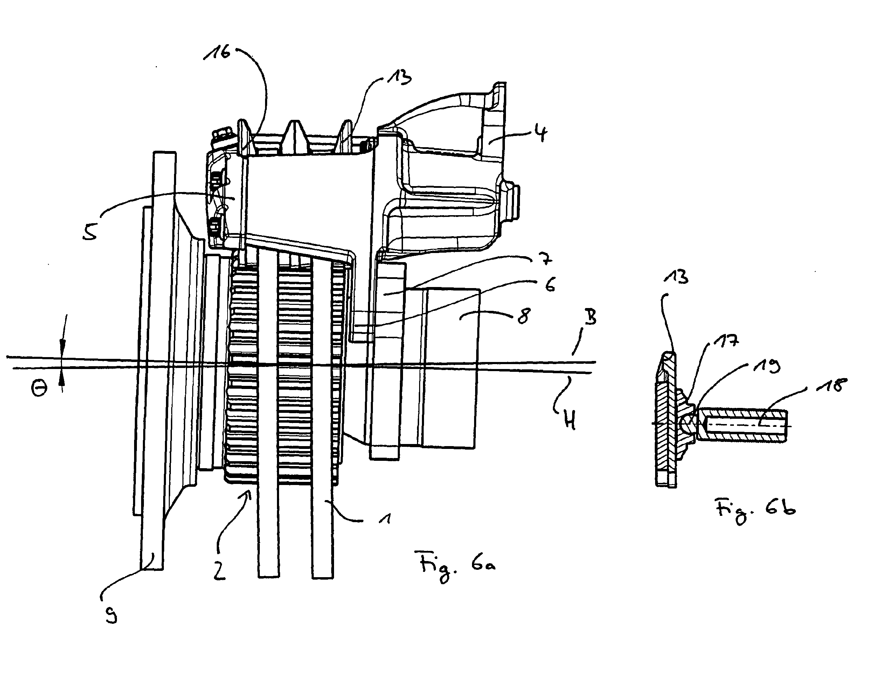

Still in another alternative embodiment as illustrated in Fig. 6a, such inclination can be achieved in that the inner surface 16 of the bolted bridge 5 is formed and inclined relative to the accompanying brake pad 13, which induces the desired inclination to the brake discs 1. Since in this embodiment the assembly of the brake disc 1 and the brake pads 13 are inclined relative to the caliper 4 and thus the actuation mechanism received by the caliper 4, means have to be provided in the actuation mechanism in order to adapt to said desired inclination.

Fig. 6b schematically shows such means in which a pressure plate 17 and a spindle 18 of the actuation mechanism are articulated by joint 19 so that angular deviations can be compensated accordingly.

It has to be noted that the desired inclination as explained in connection with Figs. 2b and 4 can be also achieved by specific geometric configurations of either the torque plate 7 or the bolted bridge 5, respectively.

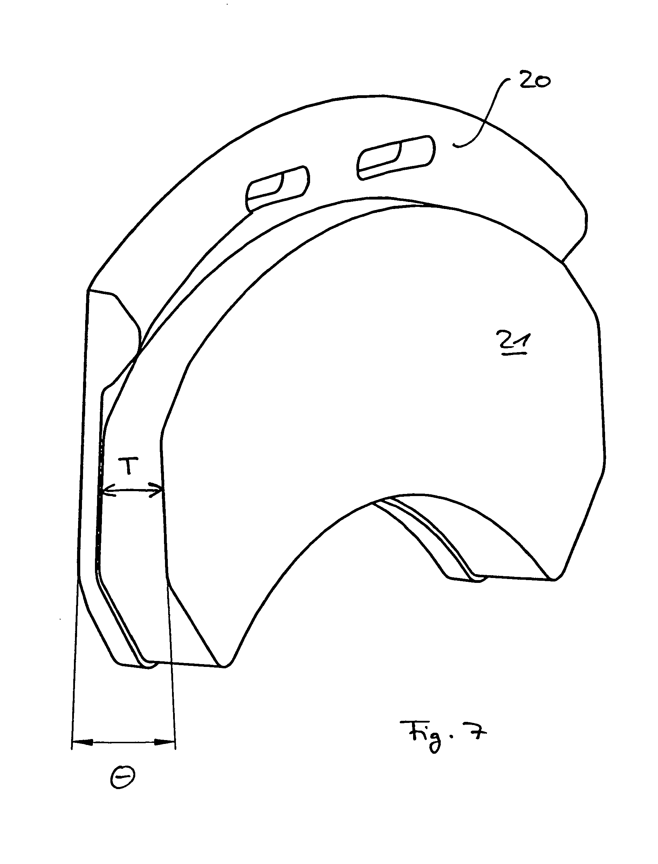

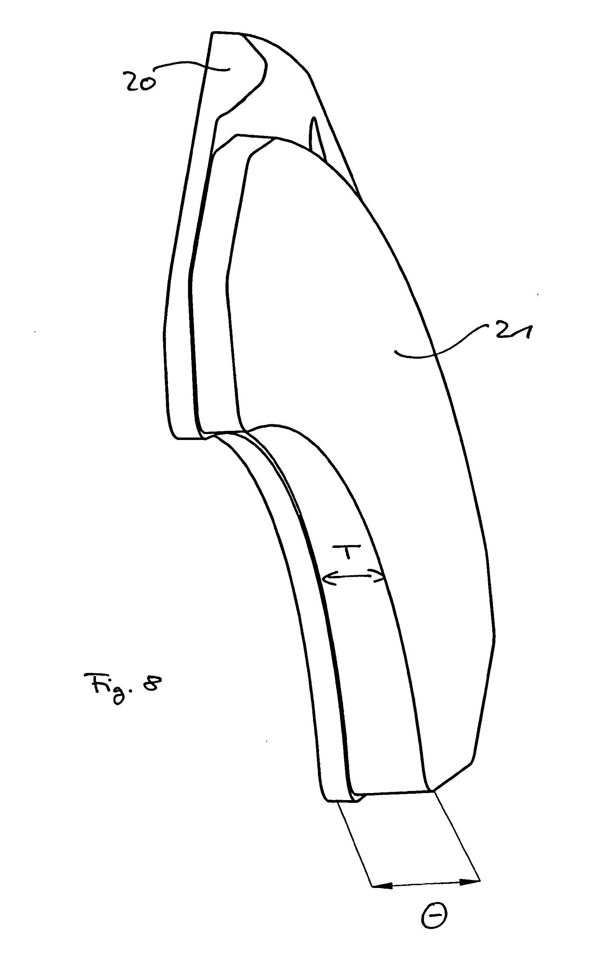

Instead of inclining the inner surface 16 of the bolted bridge 5, alternatively, also the outer brake pad 13, i.e. the brake pad 13 which is opposite of the actuation mechanism and which cooperates with the bolted bridge 5 on the reaction side of the caliper 4, can be accordingly designed and formed so that the desired inclination for the brake discs 1 can be achieved. Figs. 7 and 8 illustrate such possibilities. In the same way, it is also possible to accordingly shape the inner surface of a bridge part, which forms an integrated part of a one piece-caliper.

In Fig. 7 exemplarily a brake pad 13 is shown which comprises a backplate 20 and a friction lining 21. The friction lining 21 comprises a varying thickness T which increases from the top of the brake pad 13 towards the bottom of it, when seen in its mounting condition, by the angle Θ. By such a design a desired inclination can be achieved as this is explained in connection with Fig. 2a.

With reference to Fig. 8, in order to achieve an inclination as explained in connection with Fig. 2b, the thickness T of the friction lining 21 is increasing from one lateral side of the brake pad 13 to the other lateral side of it, as seen in tangential direction of a rotating brake disc, by the angle Θ.

## Claims

1. Disc brake for a vehicle having a caliper (4) receiving one or more brake pads (13) and encircling one or more brake discs (1), of which at least one brake disc (1) is received slideably on a hub (2) or a part connected to the hub (2) by means of intermeshing splines (3) or teeth of both the brake disc (1) and the hub (2) or the part connected to the hub (2), which hub (2) is received on a wheel axle (8), whereby the caliper (4) comprises a brake actuation mechanism and the caliper (4) can be mounted via fastening sections (6) to mounting means (7) of the vehicle, **characterized in that,** at brake engagement, the rotational axis (B) of the at least one brake disc (1) is inclined vis-à-vis the rotational axis (H) of the hub (2) or the part connected to the hub (2) such that the rotational axis (B) of the at least one brake disc (1) is located on a generated surface of a doubled cone (10) with a cone angle Θ and the center of which is being located on the rotational axis (h) of the hub (2) or the part connected to the hub (2).

2. Disc brake according to claim 1, in which the rotational axis (B) of the at least one brake disc (1) is crossing the rotational axis (H) of the hub (2) or the part connected to the hub (2) in or adjacent to the center of gravity (11) of the at least one brake disc (1).

3. Disc brake according to claim 1 or 2, in which the rotational axis (B) of the at least one brake disc (1) is inclined vis-à-vis the rotational axis (H) of the hub (2) or the part connected to the hub (2) such that the rotational axis (B) of the at least one brake disc (1) is located in a symmetry plane (12) of the caliper (4).

4. Disc brake according to claim 3, in which the inclination of the rotational axis (B) of the at least one brake disc (1) is such that the segment of the brake disc (1) between the brake pads (13) is constituting the segment of the brake disc (1) in the circumference of it which is located axially most distant from the brake actuation mechanism.

5. Disc brake according to claim 1 or 2, in which the rotational axis (B) of the at least one brake disc (1) is inclined vis-à-vis the rotational axis (H) of the hub (2) or the part connected to the hub (2) such that the rotational axis (B) of the at least one brake disc (1) is located in a plane (14) including the rotational axis (H) of the hub (2) and being perpendicular to the symmetry plane (12) of the caliper (4).

6. Disc brake according to claim 1 or 2, in which the rotational axis (B) of the at least one brake disc (1) is inclined vis-à-vis the rotational axis (H) of the hub (2) or the part connected to the hub (2) such that the rotational axis (H) of the at least one brake disc (1) is located in a plane (15) including the rotational axis (H) of the hub (2) and being inclined to the symmetry plane (12) of the caliper (4).

7. Disc brake according to one of claims 2 - 6, in which at least one part of the caliper (4) is designed in order to provide the desired inclination.

8. Disc brake according to claim 7, in which the fastening sections (6) of the caliper (4) are designed in order to provide the desired inclination.

9. Disc brake according to claim 7, in which the caliper (4) comprises an integrated bridge part or a bolted bridge (5) the inner surface (16) of which is designed in order to provide the desired inclination, respectively.

10. Disc brake according to one of claims 2 - 6, in which the caliper (4) is inclined.

11. Disc brake according to claim 10, in which the mounting means (7) for the caliper (4) are designed in order to provide the desired inclination.

12. Disc brake according to one of claims 2 - 6, in which the outer brake pad (13) is designed in order to provide the desired inclination.

13. Disc brake according to claim 9 or 12, in which the brake actuation mechanism is adapted to the desired inclination.

14. Disc brake according to one of the preceding claims, in which the desired inclination of the rotational axis (B) of the at least one brake disc (1) vis-à-vis the rotational axis (H) of the hub (2) or the part connected to the hub (2) is designed so as to reduce or offset any inclinations between the rotational axis (B) of the at least one brake disc (1) and the rotational axis (H) of the hub (2) or the part connected to the hub (2), which are resulting from elastic deformations of the caliper (4) and/or its mounting means (7) during brake actuation due to the clamping force and/or braking torque.

15. Disc brake according to one of the preceding claims, in which the cone angle Θ is within the range of 0.1 - 0.5°.

16. Brake pad for use in a disc brake for a vehicle having a caliper (4) receiving one or more of said brake pads (13) and encircling one or more brake discs (1), of which at least one brake disc (1) is received slideably on a hub (2) or a part connected to the hub (2) by means of intermeshing splines (3) or teeth of both the brake disc (1) and the hub (2) or the part connected to the hub (2), the rotational axis (B) of the at least one brake disc (1) at brake engagement being inclined vis-à-vis the rotational axis (H) of the hub (2) or the part connected to the hub (2), wherein the brake pad (13) comprises a friction lining (21) attached to a backplate (20) **characterized in that** the surface of the friction lining (21) cooperating with the brake disc (1) is inclined vis-à-vis the surface of the backplate (20) opposite to the friction lining (21) in correspondence with the inclination of the rotational axis (B) of the at least one brake disc at the brake engagement.

17. Brake pad according to claim 16, in which the friction lining (21) or the backplate (20) comprises a varying thickness (T).

## Patentansprüche

1. Scheibenbremse für ein Fahrzeug aufweisend einen Bremssattel (4) zur Aufnahme von einem oder mehreren Bremsklötzen (13) und umfassend eine oder mehrere Bremsscheiben (1), von denen zumindest eine Bremsscheibe (1) auf einer Nabe (2) oder einem mit der Nabe (2) mittels ineinandergreifender Keile (3) oder Zähne sowohl der Bremsscheibe (1) als auch der Nabe oder den mit der Nabe (2) verbundenen Teil gleitfähig aufgenommen ist, wobei die Nabe (2) auf einer Radachse (8) aufgenommen ist, und wobei der Bremssattel (4) einen Bremsbetätigungsmechanismus aufweist und der Bremssattel (4) über Befestigungsabschnitte (6) an Montagemittel (7) des Fahrzeugs montiert werden kann, **dadurch gekennzeichnet, dass** bei Bremseingriff die Rotationsachse (B) der zumindest einen Bremsscheibe (1) relativ gegenüber der Rotationsachse (H) der Nabe (2) oder des mit der Nabe (2) verbundenen Teils derart geneigt ist, dass die Rotationsachse (B) der zumindest einen Bremsscheibe (1) auf einer erzeugten Oberfläche eines Doppelkegels (10) mit einem Kegelwinkel (Θ) lokalisiert ist und dessen Zentrum auf einer Rotationsachse (h) der Nabe (2) oder des mit der Nabe (2) verbundenen Teils lokalisiert ist.

2. Scheibenbremse nach Anspruch 1, bei welcher die Rotationsachse (B) der zumindest einen Bremsscheibe (1) die Rotationsachse (H) der Nabe (2) oder des mit der Nabe (2) verbundenen Teils in dem Schwerpunkt (11) der zumindest einen Bremsscheibe (1) oder in der Nähe dazu kreuzt.

3. Scheibenbremse nach Anspruch 1 oder 2, bei welcher die Rotationsachse (B) der zumindest einen Bremsscheibe (1) relativ gegenüber der Rotationsachse (H) der Nabe (2) oder des mit der Nabe (2) verbundenen Teils derart geneigt ist, dass die Rotationsachse (B) der zumindest einen Bremsscheibe (1) in einer Symmetrieebene (12) des Bremssattels (4) lokalisiert ist.

4. Scheibenbremse nach Anspruch 3, bei welcher die Neigung der Rotationsachse (B) der zumindest einen Bremsscheibe (1) derart ist, dass das Segment der Bremsscheibe (1) zwischen den Bremsklötzen (13) dasjenige Segment der Bremsscheibe (1) im Umfang von dieser darstellt, welches axial am Weitesten von dem Bremsbetätigungsmechanismus beabstandet ist.

5. Scheibenbremse nach Anspruch 1 oder 2, bei welcher die Rotationsachse (B) der zumindest einen Bremsscheibe (1) relativ gegenüber der Rotationsachse (H) der Nabe (2) oder des mit der Nabe (2) verbundenen Teils derart geneigt ist, dass die Rotationsachse (B) der zumindest einen Bremsscheibe (1) in einer Ebene (14) lokalisiert ist, welche die Rotationsachse (H) der Nabe (2) umfasst und senkrecht zu der Symmetrieebene (12) des Bremssattels (4) ist.

6. Scheibenbremse nach Anspruch 1 oder 2, bei welcher die Rotationsachse (B) der zumindest einen Bremsscheibe (1) relativ gegenüber der Rotationsachse (H) der Nabe (2) oder des mit der Nabe (2) verbundenen Teils derart geneigt ist, dass die Rotationsachse (B) der zumindest einen Bremsscheibe (1) in einer Ebene (15) lokalisiert ist, welche die Rotationsachse (H) der Nabe (2) umfasst und welche zu der Symmetrieebene (12) des Bremssattels (4) geneigt ist.

7. Scheibenbremse nach einem der Ansprüche 2 bis 6, bei welcher zumindest ein Teil des Bremssattels (4) ausgestaltet ist, um die gewünschte Neigung zur Verfügung zu stellen.

8. Scheibenbremse nach Anspruch 7, bei welcher die Befestigungsabschnitte (6) des Bremssattels (4) ausgestaltet sind, um die gewünschte Neigung zur Verfügung zu stellen.

9. Scheibenbremse nach Anspruch 7, bei welcher der Bremssattel (4) einen integrierten Brückenabschnitt oder eine verschraubte Brücke (5) aufweist, dessen bzw. deren innere Oberfläche (16) jeweils ausgestaltet ist, um die gewünschte Neigung zur Verfügung zu stellen.

10. Scheibenbremse nach einem der Ansprüche 2 bis 6, bei welcher der Bremssattel (4) geneigt ist.

11. Scheibenbremse nach Anspruch 10, bei welcher die Montagemittel (7) für den Bremssattel (4) ausgestaltet sind, um die gewünschte Neigung zur Verfügung zu stellen.

12. Scheibenbremse nach einem der Ansprüche 2 bis 6, bei welcher der äußere Bremsklotz (13) ausgestaltet ist, um die gewünschte Neigung zur Verfügung zu stellen.

13. Scheibenbremsen nach Anspruch 9 oder 12, bei welcher der Bremsbetätigungsmechanismus an die gewünschte Neigung angepasst ist.

14. Scheibenbremse nach einem der vorhergehenden Ansprüche, bei welcher die gewünschte Neigung der Rotationsachse (B) der zumindest einen Bremsscheibe (1) relativ gegenüber der Rotationsachse (H) der Nabe (2) oder des mit der Nabe (2) verbundenen Teils ausgestaltet ist, um irgendwelche Neigungen zwischen der Rotationsachse (B) der zumindest einen Bremsscheibe (1) und der Rotationsachse (H) der Nabe (2) oder des mit der Nabe (2) verbundenen Teils, die aus elastischen Deformationen des Bremssattels (4) und/oder seiner Montagemittel (7) während der Bremsbetätigung aufgrund der Zuspannkraft und/oder des Bremsmoments resultieren, zu reduzieren oder auszugleichen.

15. Scheibenbremse nach einem der vorhergehenden Ansprüche, bei welcher der Kegelwinkel (e) innerhalb eines Bereich von 0,1 bis 0,5 ° liegt.

16. Bremsklotz zur Verwendung in einer Scheibenbremse für ein Fahrzeug aufweisend einen Bremssattel (4) zur Aufnahme von einem oder mehreren dieser Bremsklötze (13) und umfassend eine oder mehrere Bremsscheiben (1), von denen zumindest eine Bremsscheibe (1) auf einer Nabe (2) oder auf einem mit der Nabe (2) verbundenen Teil mittels ineinandergreifender Keile (3) oder Zähne sowohl der Bremsscheibe (1) als auch der Nabe (2) oder des mit der Nabe (2) verbundenen Teils gleitfähig aufgenommen ist, wobei die Rotationsachse (B) der zumindest einen Bremsscheibe (1) bei Bremseingriff relativ gegenüber der Rotationsachse (H) der Nabe (2) oder des mit der Nabe (2) verbundenen Teils geneigt ist, wobei der Bremsklotz (13) einen Reibungsbelag (21) aufweist, der an eine Bremsbelagplatte (20) angeordnet ist, **dadurch gekennzeichnet, dass** die Oberfläche des mit der Bremsscheibe (1) zusammenwirkenden Reibungsbelags (21) relativ gegenüber der Oberfläche der Bremsbelagplatte (20), die dem Reibungsbelag (21) gegenüberliegt, in Übereinstimmung mit der Neigung der Rotationsachse (B) der zumindest einen Bremsscheibe bei Bremseingriff geneigt ist.

17. Bremsklotz nach Anspruch 16, bei welchem der Reibungsbelag (21) oder die Bremsbelagplatte (20) eine variierende Dicke (T) aufweist.

## Revendications

1. Frein à disque pour un véhicule comportant un étrier de frein (4) recevant une ou plusieurs plaquettes de frein (13) et enserrant un ou plusieurs disques de frein (1) dont au moins un est monté par glissement sur un moyeu (2) au moyen de cannelures (3) ou de dents engrenées, situées à la fois sur le disque de frein (1) et sur le moyeu (2) ou sur la partie reliée au moyeu (2), lequel moyeu (2) est monté sur un axe de roue (8), l'étrier (4) comprenant un mécanisme d'actionnement du frein et pouvant être monté à l'aide d'éléments de fixation (6) sur des moyens de montage (7) du véhicule, **caractérisés par le fait que** lorsque le frein est actionné, l'axe de rotation (B) du ou des disques de frein (1) est incliné par rapport de l'axe de rotation (H) du moyeu (2) ou de la partie reliée au moyeu (2), de manière que l'axe de rotation (B) du ou des disques de frein (1) soit situé sur la surface générée d'un cône double (10) ayant un angle au sommet □et dont le centre est situé sur l'axe de rotation (H) du moyeu (2) ou de la partie reliée au moyeu (2).

2. Frein à disque conforme à la demande 1, pour lequel l'axe de rotation (B) du ou des disques de frein (1) coupe l'axe de rotation (H) du moyeu (2), ou de la partie reliée au moyeu (2), au centre de gravité (11) du ou des disques de frein (1) ou en un point adjacent à ce dernier.

3. Frein à disque conforme aux demandes 1 ou 2, pour lequel l'axe de rotation (B) du ou des disques de frein (1) est incliné par rapport à l'axe de rotation (H) du moyeu (2) ou de la partie reliée au moyeu (2), de manière que ledit axe de rotation (B) du ou des disques de frein (1) soit situé dans le plan de symétrie (12) de l'étrier (4).

4. Frein à disque conforme à la demande 3, pour lequel l'inclinaison de l'axe de rotation (B) du ou des disques de frein (1) est telle que la partie du disque de frein (1) comprise entre les plaquettes de frein (13) constitue la partie de la circonférence la plus éloignée, axialement, du mécanisme d'actionnement du frein.

5. Frein à disque conforme aux demandes 1 ou 2, pour lequel l'axe de rotation (B) du ou des disques de frein (1) est incliné par rapport à l'axe de rotation (H) du moyeu (2) ou de la partie reliée au moyeu (2), de manière que ledit axe de rotation (B) du ou des disques de frein (1) soit situé dans un plan (14) comprenant l'axe de rotation (H) du moyeu (2) et perpendiculaire au plan de symétrie (12) de l'étrier (4).

6. Frein à disque conforme aux demandes 1 ou 2, pour lequel l'axe de rotation (B) du ou des disques de frein (1) est incliné par rapport à l'axe de rotation (H) du moyeu (2) ou de la partie reliée au moyeu (2), de manière que ledit axe de rotation (B) du ou des disques de frein (1) soit situé dans un plan (15) comprenant l'axe de rotation (H) du moyeu (2) et incliné vers le plan de symétrie (12) de l'étrier (4).

7. Frein à disque conforme à l'une des demandes 2 à 6, pour lequel au moins une partie de l'étrier (4) est conçue de façon à fournir l'inclinaison désirée.

8. Frein à disque conforme à la demande 7, pour lequel les éléments de fixation (6) de l'étrier (4) sont conçus de façon à fournir l'inclinaison désirée.

9. Frein à disque conforme à la demande 7, pour lequel l'étrier (4) comprend une partie intégrée faisant pont ou un pontet boulonné (5), dont les surfaces intérieures respectives (16) sont conçues de façon à fournir l'inclinaison désirée.

10. Frein à disque conforme à l'une des demandes 2 à 6, pour lequel l'étrier (4) est incliné.

11. Frein à disque conforme à la demande 10, pour lequel les moyens de montage (7) de l'étrier (4) sont conçus de façon à fournir l'inclinaison désirée.

12. Frein à disque conforme à l'une des demandes 2 à 6, pour lequel la plaquette de frein extérieure (13) est conçue de façon à fournir l'inclinaison désirée.

13. Frein à disque conforme à l'une des demandes 9 ou 12, pour lequel le mécanisme d'actionnement du frein est réglé pour l'inclinaison désirée.

14. Frein à disque conforme à l'une des demandes précédentes, pour lequel l'inclinaison désirée de l'axe de rotation (B) du ou des disques de frein (1) par rapport à l'axe de rotation (H) du moyeu (2) ou de la partie reliée au moyeu (2), est conçue de façon à réduire ou à compenser toute inclinaison de l'axe de rotation (B) du ou des disques de frein (1) par rapport à l'axe de rotation (H) du moyeu (2) ou de la partie reliée au moyeu (2), résultant d'une déformation de l'étrier (4) et/ou de ses moyens de montage (7) durant l'actionnement du frein, due à la force de serrage et/ou au couple de freinage.

15. Frein à disque conforme à l'une des demandes précédentes, pour lequel l'angle □ du cône est compris entre 0,1 et 0,5°.

16. Plaquette de frein destinée au frein à disque d'un véhicule comportant un étrier (4) recevant une ou plusieurs desdites plaquettes de frein (13) et enserrant un ou plusieurs disques de frein (1) dont l'un au moins peut être monté par glissement sur un moyeu (2) ou sur une partie reliée au moyeu (2) au moyen de cannelures (3) ou de dents engrenées, situées à la fois sur le disque de frein (1) et sur le moyeu (2) ou sur la partie reliée au moyeu (2), l'axe de rotation (B) du ou des disques de frein (1) étant, lors de l'actionnement du frein, incliné par rapport à l'axe de rotation (H) du moyeu (2) ou de la partie reliée au moyeu (2), et la plaquette de frein (13) comportant une garniture de friction (21) fixée sur une tôle support (20) **caractérisée par le fait que** la surface de la garniture (21) entrant en contact avec le disque de frein (1) est inclinée par rapport à la surface de la tôle support (20) opposée à la garniture (21), de la même manière que l'axe de rotation (B) du ou des disques de frein (1) durant l'actionnement du frein.

17. Plaquette de frein conforme à la demande 16, pour laquelle l'épaisseur (T) de la garniture (21) ou de la tôle support (20), est variable
